# EUROPÄISCHE PATENTSCHRIFT

(11) **EP 3 595 427 B1**
(45) Veröffentlichungstag und Bekanntmachung des Hinweises auf die Patenterteilung: **11.01.2023**
(21) Anmeldenummer: 18714961.2
(22) Anmeldetag: 09.03.2018
(51) Int. Cl.: A01B 69/04, G05D 1/02

(54) **VERFAHREN ZUM PLANEN DER BEARBEITUNG EINES LANDWIRTSCHAFTLICHEN FELDES**
METHOD FOR PLANNING THE WORKING OF AN AGRICULTURAL FIELD
PROCÉDÉ POUR PLANIFIER LE TRAVAIL D'UN CHAMP AGRICOLE

(30) Priorität: 17.03.2017 DE 102017105773
(43) Veröffentlichungstag der Anmeldung: 22.01.2020
(73) Patentinhaber: Lemken GmbH & Co KG, 46519 Alpen (DE)
(72) Erfinder: VAN HAAREN, Josef, 47546 Kalkar (DE); VAN DEN BOOM, Marco, 46509 Xanten (DE)
(86) Internationale Anmeldenummer: PCT/DE2018/100217
(87) Internationale Veröffentlichungsnummer: WO 2018/166561

(56) Entgegenhaltungen:
- WO-A1-2014/105280
- US-A- 6 088 644
- US-A1- 2006 175 541

## Beschreibung

### TECHNISCHES GEBIET

Die vorliegende Erfindung betrifft ein Verfahren zum Planen eines Bearbeitens eines zumindest viereckigen Bereichs eines landwirtschaftlichen Felds mittels eines lenkbaren oder steuerbaren landwirtschaftlichen Arbeitsgeräts. Ferner betrifft die vorliegende Erfindung ein entsprechendes Bearbeitungsverfahren für ein landwirtschaftliches Feld sowie eine Vorrichtung zum Steuern eines landwirtschaftlichen Arbeitsgeräts, ein landwirtschaftliches Arbeitsgerät, ein Computerprogrammprodukt hierfür und ein System zur Fernunterstützung des Planungsverfahrens.

### STAND DER TECHNIK

Insbesondere bei der Bearbeitung von nicht rechteckigen Feldern ist es von großer Bedeutung, eine Strategie für die Bearbeitung des Felds auszuarbeiten, um diese möglichst effizient zu halten. Hierbei soll zunächst verhindert werden, dass unnötig viel Zeit für die Bearbeitung des Felds aufgewendet werden muss. Ferner ist eine ungleichmäßige Bearbeitung eines Felds im Hinblick auf die Nutzung des Bodens oft negativ, weil beispielsweise unterschiedliche Bearbeitungsintensitäten des Bodens je nach geplanter Nutzung eine teilweise zu starke und teilweise zu schwache Bearbeitungsintensität bedeuten können. Es ist also ein Anliegen des Landwirts, ein Feld effizient und hochwertig zu bearbeiten, um einen möglichst guten Ertrag bei möglichst geringem Aufwand zu erhalten.

Aus dem Stand der Technik sind mehrere Systeme bekannt, die unterschiedliche Philosophien verfolgen. Beispielsweise offenbart das Dokument DE 10 2004 027 242 A1 ein Routenplanungssystem für landwirtschaftliche Arbeitsmaschinen mit einer definierten Arbeitsbreite, mit dem Fahrspuren in einem Territorium definiert werden. Die WO2014105280A1 betrifft eine automatische Fahrspurplanung und Spurführung eines landwirtschaftlichen Fahrzeuges mit Eckpunktbestimmung der Fahrspursegmente anhand direkt benachbarter Feldränder. US2006175541A1 offenbart eine Parallelfahrspurplanung anhand einer zusammenhängenden, gekrümmten Außenkontur unter Vermeidung von Auslassungen oder Überlappungen. US6088644A zeigt eine Parallelfahrspurplanung in gedrehter Fahrspurausrichtung zu einer rechteckigen Arbeitsfeldberandung.

Aus dem Dokument EP 2 238 819 B1 ist ein Verfahren bekannt, bei dem die Arbeitsbreite des landwirtschaftlichen Arbeitsgeräts entlang der Fahrspur verändert wird, um sich den äußeren Abmessungen des zu bearbeitenden Feldes anzupassen. Hierbei wird die Arbeitsbreite des landwirtschaftlichen Arbeitsgeräts stetig verändert, sodass jeweils fächerförmige Fahrspuren entstehen. Auf diese Weise kann erreicht werden, dass das landwirtschaftliche Arbeitsgerät jeweils die gesamte Strecke seiner Überfahrt zur Bearbeitung nutzen kann, wodurch unerwünschte "Leerfahrten" vermieden werden können. Ein ähnliches Prinzip geht auch aus weiteren Dokumenten aus dem Stand der Technik hervor, beispielsweise aus DE 10 2015 204 768 A1, EP 2 236 020 B1 oder EP 2 918 155 A2.

Ein Beispiel für ein landwirtschaftliches Arbeitsgerät mit verstellbarer Arbeitsbreite ist in der deutschen Patentanmeldung DE 100 39 600 A1 offenbart. Derartige Arbeitsgeräte sind dem Fachmann grundsätzlich bekannt.

Ein Nachteil der aus dem Stand der Technik bekannten fächerförmigen Bearbeitung eines nicht rechtwinklig geschnittenen Felds besteht darin, dass durch die Fächerform, genauer gesagt durch die sich stetig verändernde Arbeitsbreite, die zu der Fächerform führt, eine ungleichmäßige Bodenbearbeitung stattfindet, wenn es sich bei dem landwirtschaftlichen Arbeitsgerät beispielsweise um einen Pflug oder ein ähnliches Gerät handelt. Beim Pflügen beispielsweise variiert die Körnigkeit des bearbeiteten Bodens von grobkörnig bis feinkörnig - je nach Situation in erheblichem Umfang. Bei einer Feldspritze oder einem anderen Ausbringungsgerät kann sich aus der mit der Fächerform verbundenen kontinuierlichen Änderung der Arbeitsbreite eine sich verändernde Dichte des ausgebrachten Materials ergeben.

Darüber hinaus erfordert die fächerförmige Bearbeitung sehr viele Schalt- und Lenkvorgänge, weil sich die Arbeitsbreite zumindest über einen sehr großen Teil des Fahrspurverlaufs oder über den gesamten Fahrspurverlauf quasi kontinuierlich verändern muss. Dies führt beispielsweise zu erhöhtem Verschleiß und daher höheren Betriebskosten.

Eine Aufgabe der vorliegenden Erfindung liegt somit darin, ein Verfahren bereitzustellen, mit dem ein nicht-rechteckiges Feld effizient, gleichmäßig und verschleißarm bearbeitet werden kann. Ferner besteht eine Aufgabe der vorliegenden Erfindung darin, eine Vorrichtung zur Durchführung eines solchen Verfahrens sowie eine Vorrichtung, mit der eine erfindungsgemäße bzw. bevorzugte geplante Bearbeitung durchgeführt werden kann, bereitzustellen.

Die Aufgabe der vorliegenden Erfindung wird durch die Gegenstände der unabhängigen Patentansprüche gelöst. Vorteilhafter Ausgestaltungen der Erfindung ergeben sich aus den Unteransprüchen.

Ein erfindungsgemäßes Verfahren zum Planen eines Bearbeitens eines zumindest viereckigen Bereichs eines landwirtschaftlichen Felds mittels eines lenkbaren oder steuerbaren landwirtschaftlichen Arbeitsgeräts, wobei der Bereich zwischen seinen Ecken Randabschnitte und dabei einen ersten Randabschnitt und einen zweiten Randabschnitt gegenüber dem ersten Randabschnitt aufweist und wobei der zweite Randabschnitt schräg zum ersten Randabschnitt verläuft, umfasst die folgenden Schritte: (a) Bestimmen mehrerer nebeneinander verlaufender erster Arbeitsbahnen parallel und/oder äquidistant zum ersten Randabschnitt und Bestimmen mehrerer nebeneinander verlaufender zweiter Arbeitsbahnen parallel und/oder äquidistant zum zweiten Randabschnitt, (b) Bestimmen einer Fahrspur, die zumindest teilweise entlang den ersten Arbeitsbahnen und den zweiten Arbeitsbahnen verläuft und entlang der das landwirtschaftliche Arbeitsgerät vom ersten Randabschnitt über den Bereich zum zweiten Randabschnitt bewegt werden soll, um den Bereich zu bearbeiten, (c) Bestimmen mehrerer Einlenkpunkte entlang der Fahrspur, an dem das Arbeitsgerät von einer Richtung entlang einer der ersten Arbeitsbahnen in eine Richtung entlang einer der zweiten Arbeitsbahnen oder von einer Richtung entlang einer der zweiten Arbeitsbahnen in eine Richtung entlang einer der ersten Arbeitsbahnen gelenkt wird, so dass die Fahrspur mit zunehmender Entfernung vom ersten Randabschnitt weniger entlang den ersten Arbeitsbahnen und mit abnehmender Entfernung zum zweiten Randabschnitt mehr entlang den zweiten Arbeitsbahnen verläuft.

Die "Ecken" des als zumindest viereckig bezeichneten Bereichs können abgerundet oder spitz sein und die "Randabschnitte" des Bereichs können leichte Krümmungen aufweisen, sie müssen also nicht entlang einer geraden Linie verlaufen. Es wird jedoch bevorzugt, dass die Randabschnitte jeweils entlang einer geraden Linie verlaufen.

Ferner ist es möglich, dass durch das erfindungsgemäße Verfahren auch ein mehr-als-viereckiger Bereich, beispielsweise ein sechseckiger, achteckiger, zehneckiger etc., aber auch fünfeckiger, siebeneckiger, neuneckiger etc. Bereich, eines landwirtschaftlichen Feldes bearbeitet wird. In diesem Fall ist es beispielsweise möglich, den Bereich in mehrere jeweils viereckige Bereiche zu unterteilen, wobei einzelne "Ecken" auch mehrfach verwendet werden können. Mit anderen Worten können einzelne Stellen entlang dem Rand des Bereichs gleichzeitig als "Ecken" verschiedener jeweils viereckiger Bereiche definiert sein.

Der "Bereich" des landwirtschaftlichen Feldes definiert das gesamte landwirtschaftliche Feld oder nur einen Teilbereich des Felds, das dann auch einen oder mehrere weitere Bereiche aufweist. Bei einem kompliziert konturierten Feld kann es erforderlich werden, das Feld in mehrere viereckige oder mehr-als-viereckige Bereiche zu unterteilen, die entweder direkt ineinander übergehen oder voneinander beabstandet sein können.

Dass der zweite Randabschnitt "gegenüber dem ersten Randabschnitt angeordnet" ist, bedeutet im Sinne der vorliegenden Erfindung, dass der erste Randabschnitt und der zweite Randabschnitt nicht direkt benachbart zueinander sind, das heißt keinen gemeinsamen, sie verbindenden Eckpunkt haben.

Die Fahrspur verläuft erfindungsgemäß "zumindest teilweise" entlang den ersten Arbeitsbahnen und den zweiten Arbeitsbahnen, so dass sie über einen Teil des Felds auch ausschließlich entlang einer der beiden Arbeitsbahnen verlaufen kann. Sofern der erste und der zweite Randabschnitt jedoch schräg zueinander verlaufen, das heißt nicht parallel zueinander liegen, muss innerhalb des Bereichs zumindest ein Teil der Fahrspur nur zum Teil entlang einer der ersten Arbeitsbahnen und zum komplementären Teil entlang einer der zweiten Arbeitsbahnen verlaufen.

Bevorzugt verläuft die Fahrspur zunächst entlang einer der ersten Arbeitsbahnen, dann entlang einer der zweiten Arbeitsbahnen, und je nach Kontur des Bereichs nach einem Wendemanöver, beispielsweise über ein Vorgewende, zunächst in entgegengesetzter Richtung entlang einer der zweiten Arbeitsbahnen und dann wieder entlang einer der ersten Arbeitsbahnen, oder je nach Kontur des Bereichs ohne

Wendemanöver, entlang einer von dritten Arbeitsbahnen, die beispielsweise durch einen Randabschnitt eines sich an den Bereich anschließenden zweiten Bereichs definiert sein können.

Die "Richtung entlang einer der ersten Arbeitsbahnen" bzw. die "Richtung entlang einer der zweiten Arbeitsbahnen" kann beispielsweise durch ihrer Parallelität zur ersten Arbeitsbahn bzw. zweiten Arbeitsbahn oder zum ersten Randabschnitt bzw. zweiten Randabschnitt definiert werden.

Unter der "Entfernung" vom ersten bzw. zweiten Randabschnitt wird eine im Wesentlichen senkrecht zum Randabschnitt gemessene Distanz verstanden. Idealisiert befindet sich das landwirtschaftliche Arbeitsgerät in einem durch die Zahl und Breite der zwischen sich und dem jeweiligen Randbereich liegenden ersten bzw. zweiten Arbeitsbahnen bestimmten Abstand vom ersten bzw. zweiten Randabschnitt. Erfindungsgemäß wird der Anteil der ersten bzw. zweiten Arbeitsbahn an der Fahrspur immer größer, je näher sich das Arbeitsgerät an dem entsprechenden Randabschnitt befindet.

Auf diese Weise ist es möglich, zunächst die Zahl an Schalt- und Lenkvorgängen bei der Benutzung des Arbeitsgeräts zu minimieren. Außerdem wird durch die erfindungsgemäße Planung des Bearbeitens eine gleichmäßigere Bodenbearbeitung erzielbar, ohne eine spürbar geringere Effizienz gegenüber der aus dem Stand der Technik bekannten fächerförmigen Bearbeitung hinnehmen zu müssen. Es kann also zunächst die Qualität der Bodenbearbeitung und außerdem die Wirtschaftlichkeit der Bearbeitung im Hinblick auf einen reduzierten Verschleiß verbessert werden.

In einer bevorzugten Ausführungsform werden die Einlenkpunkte entlang der Fahrspur so bestimmt, dass sie auf einer den ersten Randabschnitt und den zweiten Randabschnitt verbindenden Diagonalen liegen.

Mit einer "Diagonalen" ist in diesem Fall eine Linie gemeint, welche zwei Ecken des ersten und zweiten Randabschnitts miteinander verbindet und sich dabei so über den von den Randabschnitten begrenzten Bereich erstreckt, dass sie den Bereich in zwei Teile unterteilt. Durch die Diagonale können also aus dem viereckigen Bereich zwei dreieckige Bereiche definiert werden, die entlang der Diagonalen aneinanderstoßen.

Wenn die Einlenkpunkte im Wesentlichen auf den Diagonalen liegen, ist die Verteilung der Anteile der Fahrspur entlang der ersten Arbeitsbahnen und entlang der zweiten Arbeitsbahnen für die Bearbeitung des Bereichs optimal. Es ist jedoch auch möglich, die Einlenkpunkte anders als auf der Diagonalen zu positionieren, beispielsweise wenn operationelle Gründe im Betrieb des Arbeitsgeräts oder die Topografie des Bodens dagegen sprechen. Hierfür wird ferner bevorzugt, einen Flächenbereich um die Diagonale zu definieren, innerhalb dessen die Einlenkpunkte liegen. Der Flächenbereich kann beispielsweise durch einen bestimmten maximalen Abstand von der Diagonalen bestimmt sein.

Gemäß einer bevorzugten Ausführungsform ist die Arbeitsbreite des Arbeitsgeräts während des Bearbeitens zwischen mindestens zwei verschiedenen Werten veränderbar. In dieser bevorzugten Ausführungsform wird vorzugsweise ein Schaltpunkt oder werden vorzugsweise mehrere Schaltpunkte entlang der Fahrspur bestimmt, an dem oder an denen damit begonnen wird, die Arbeitsbreite des Arbeitsgeräts von einem der mindestens zwei Werte auf einen anderen der mindestens zwei Werte zu verändern.

Unter einer "Arbeitsbreite" wird im vorliegenden Zusammenhang eine tatsächliche Arbeitsbreite, aber auch eine wirksame Arbeitsbreite verstanden, die von der tatsächlichen Arbeitsbreite unterschiedlich sein kann. Die tatsächliche

Arbeitsbreite ist beispielsweise im Fall eines Pflugs von Bedeutung, der einen Bodenstreifen einer bestimmten Breite bearbeitet. Eine wirksame Arbeitsbreite lässt sich insbesondere bei Verteilmaschinen, Feldspritzen und dergleichen definieren, bei denen beispielsweise nur ein Teil der gesamten Breite des Geräts eingeschaltet ist, während ein anderer Teil der möglichen (tatsächlichen) Arbeitsbreite des Geräts außer Funktion gesetzt ist.

Nachdem damit begonnen wird, die Arbeitsbreite des Arbeitsgeräts von dem einen zu dem anderen Wert zu verändern, ist es möglich, einen kontinuierlichen Übergang zwischen verschieden breiten Arbeitsbahnen zu erhalten und somit den Bereich flächendeckend und mit geringem Überlapp zu bearbeiten. Die Dauer der Übergangszeit, das heißt die Dauer der Zeit, die vergeht, während die Arbeitsbreite des Arbeitsgerätes von dem einen auf den anderen Wert verändert wird, lässt sich vorzugsweise in Abhängigkeit von der Vorwärtsgeschwindigkeit des Arbeitsgeräts einstellen. Dieses bevorzugte Merkmal ermöglicht eine besonders gleichmäßige und effiziente Bearbeitung des Bereichs, da auf Grund der Veränderung der Arbeitsbreite doppelt und nicht bearbeitete Flächen des Bereichs weitestgehend ausgeschlossen sind.

Es ist alternativ auch möglich, mit einem Arbeitsgerät ohne verstellbare Arbeitsbreite das erfindungsgemäße Verfahren durchzuführen. Bei unterschiedlich breiten Arbeitsbahnen kann in diesem Fall eine überlappende (doppelte) Bearbeitung der Randbereiche der engeren Arbeitsbahnen erfolgen oder auch einzelne Streifen im Bereich der breiteren Arbeitsbahnen ausgelassen (nicht bearbeitet) werden.

In einer bevorzugten Ausführungsform ist das Arbeitsgerät an einen Schlepper oder Träger ankoppelbar und insbesondere als Bodenbearbeitungsgerät oder als Ausbringeinrichtung ausgebildet, vorzugsweise als ein Pflug, ein Grubber, eine Scheibenegge, ein angetriebenes Bodenbearbeitungsgerät, eine

Sämaschine, eine Feldspritze oder ein Düngerstreuer. Das Arbeitsgerät kann auch selbstfahrend sein oder an einen Roboter oder dergleichen angekoppelt werden. Wenn das Arbeitsgerät an einen Schlepper, Träger oder Roboter oder dergleichen angekoppelt ist, kann auch das Gespann aus den zumindest beiden Geräten als das "Arbeitsgerät" im Sinne der vorliegenden Erfindung angesehen werden. Beispielsweise ist ein an einen Schlepper angekoppelter Pflug als Arbeitsgerät anzusehen. Das "Ankoppeln" kann insbesondere ein Anhängen, Anbauen, Aufsatteln oder Ziehen sein.

Mit Vorteil weist die Fläche des Bereichs des Feldes die Form eines Trapezes, insbesondere eines rechtwinkligen Trapezes auf. Ein Feld kann in den allermeisten Fällen so eingeteilt werden, dass es aus im Wesentlichen trapezförmigen Bereichen aufgebaut ist. Die Bereiche können dabei durch eine kartographische Wiedergabe des Feldes, insbesondere ein Satellitenbild, eine Landkarte oder entsprechende Vektoren unterstützt werden.

Im Sinne der vorliegenden Erfindung gilt als "Trapez" eine Fläche mit mindestens zwei im Wesentlichen parallel zueinander verlaufenden Seiten. Ein Winkel von bis zu 10 Grad zwischen den beiden Seiten ist im Sinne der vorliegenden Erfindung akzeptabel, um noch als "im Wesentlichen parallel" zu gelten. Ein "rechtwinkliges Trapez" ist in diesem Zusammenhang ein Trapez, das mindestens einen rechten Innenwinkel besitzt. Für die Ausführung der vorliegenden Erfindung ist es nicht zwingend erforderlich, dass der Bereich zwei im Wesentlichen parallele Seiten aufweist. Bei einer Trapezform ist es allerdings unter Umständen leichter, die Fahrspur zu bestimmen.

Bevorzugt weist das Arbeitsgerät eine Positionsbestimmungsvorrichtung auf, insbesondere eine Vorrichtung zur signallaufzeitbasierten und/oder satellitengestützten Positionsbestimmung. Beispiele solcher Positionsbestimmungsvorrichtungen basieren auf den unter den Namen GPS, GLONASS, GALILEO bekannten Satellitennavigationssystemen, aber auch ein Radsensor, Laser, Radar, Trägheitssensor, Drehratensensor, Gyroskop oder eine Kamera können zur Bestimmung der Position des Arbeitsgerätes eingesetzt werden. Mit Hilfe einer solchen Positionsbestimmungsvorrichtung kann dem Arbeitsgerät die Fahrspur einprogrammiert werden und das Arbeitsgerät kann gegebenenfalls bei der Durchführung der Bearbeitung bestimmen, ob es sich auf dem gewünschten Kurs befindet oder von der geplanten Fahrspur abgewichen ist, um gegebenenfalls eine Korrekturlenkung zu empfehlen oder selbst vorzunehmen.

Es ist jedoch auch möglich, auf eine solche Positionsbestimmungsvorrichtung zu verzichten, beispielsweise wenn die Position des Arbeitsgerätes auf anderer Weise bekannt ist oder sich das Arbeitsgerät zwischen bekannten Referenzpunkten bewegt, die einen Rückschluss auf die Einhaltung der geplanten Fahrspur ermöglichen. Die erforderliche Genauigkeit einer Positionsbestimmung ist je nach Einsatzgebiet unterschiedlich. Entsprechend können geeignete, das heißt genügend genaue Positionsbestimmungsvorrichtungen ausgewählt oder auf eine spezielle Vorrichtung zur Positionsbestimmung verzichtet werden.

In einer bevorzugten Ausführungsform wird die Lage und/oder Ausrichtung zumindest eines der Randabschnitte des Bereichs, bevorzugt aller zumindest vier Randabschnitte des Bereichs, durch Abfahren des zumindest einen Randabschnitts, bevorzugt aller zumindest vier Randabschnitte des Bereichs, insbesondere mittels des Arbeitsgeräts, bestimmt. Die Lage und/oder Ausrichtung der Randabschnitte kann grundsätzlich auch anders als durch Abfahren bestimmt werden. Beispielsweise kann auf Kartenmaterial zurückgegriffen werden oder der Randabschnitt durch Abgehen mit einem Empfänger vermessen werden. Besonders bevorzugt ist jedoch das Arbeitsgerät selbst für das Abfahren des einen oder der mehreren Randabschnitte ausgestaltet, weil dies beispielsweise bereits zur Bearbeitung des Randabschnitts während des Abfahrens und damit einer besonders effizienten Bestimmung der Lage und/oder Ausrichtung des Randabschnitts verwendet werden kann. Es ist jedoch auch möglich, neben dem Abgehen einen Schlepper oder ein spezielles Messfahrzeug oder ein anderes Fahrzeug zu verwenden.

Falls nur ein Randabschnitt hinsichtlich seiner Lage und/oder Ausrichtung durch Abfahren bestimmt wird, handelt es sich vorzugsweise um den Zielrandabschnitt, das heißt den Randabschnitt, auf dessen gegenüberliegender Seite mit der Bearbeitung des Bereichs begonnen wird. Durch den Beginn der Bearbeitung des Bereichs auf der gegenüberliegenden Seite ergeben sich dann die Anfangsabschnitte. Alternativ kann auch das gesamte Feld bzw. der Bereich des Feldes während einer Anfangsbearbeitung abgefahren oder separat davon umfahren und das Feld bzw. der Bereich dann in einzelne Bereiche unterteilt werden, sofern das gesamte Feld noch nicht die Form eines für das vorliegende Verfahren geeigneten Bereichs aufweist. Gekrümmte Randabschnitte lassen sich zumindest näherungsweise durch eine Polygonalisierung in eine Aneinanderreihung von geraden Randabschnitten unterteilen. Je nach Krümmungsradius und Länge des jeweiligen Randabschnitts ist dies für die Durchführung des erfindungsgemäßen Verfahrens vorteilhaft.

Mit Vorteil wird zumindest einer der Schritte zeitversetzt zu einer Bearbeitung des Bereichs durchgeführt. Dies bedeutet mit anderen Worten, dass vorzugsweise zumindest ein Schritt der Planung der Bearbeitung nicht erst während der Bearbeitung durchgeführt wird, sondern bereits davor, beispielsweise um die erforderliche Zeit oder auszubringendes Material optimal bestimmen zu können.

In einer bevorzugten Ausführungsform umfasst das Arbeitsgerät zumindest zwei Arbeitsgeräteeinheiten, die voneinander getrennt in räumlich verschiedenen Teilbereichen des Bereichs nutzbar sind. Ein Beispiel für Arbeitsgeräteeinheiten, die sich zu einem Arbeitsgerät ergänzen, ist ein Roboterschwarm. Bevorzugt wird dabei, dass die Arbeitsgeräteeinheiten jeweils eine Einheitsarbeitsbreite haben, die jeweils zwischen mindestens zwei verschiedenen Werten veränderbar ist. Es ist auch möglich, dass nur eine der mehreren Arbeitsgeräteeinheiten eine veränderbare Einheitsarbeitsbreite aufweist.

Bevorzugt werden die Schritte dabei so durchgeführt, dass sich die Arbeitsgeräteeinheiten beim Bearbeiten des Bereichs ergänzen. Es wird also bevorzugt, dass sich die Arbeitsgeräteeinheiten während der Bearbeitung oder auch zeitlich versetzt untereinander über die Position der Fahrspuren und darüber, welche Arbeitsgeräteeinheit welche Fahrspur bearbeitet oder bereits bearbeitet hat, austauschen, so dass der Bereich möglichst effizient durch die mehreren Arbeitsgeräteeinheiten bearbeitet werden kann.

Ferner ist es nicht nur möglich, dass sich mehrere untereinander kommunizierende Arbeitsgeräteeinheiten in einem einzigen Bereich befinden, sondern auch, dass sich mehrere untereinander kommunizierende Arbeitsgeräteeinheiten in mehreren zusammengesetzten Bereichen befinden und dort eine Bearbeitung vornehmen, vor allem wenn die zusammengesetzten Bereiche vorzugsweise das gesamte Feld abdecken. Auf diese Weise ist es besonders effizient möglich, ein bestehendes Feld, das sich in mehrere Bereiche im Sinne der vorliegenden Erfindung unterteilen lässt, zu bearbeiten, was die Bearbeitungsgeschwindigkeit erhöht.

Weiter wird bevorzugt, dass Aufzeichnungen von bearbeiteten und/oder noch zu bearbeitenden Teilbereichen des Bereichs einem Verfahren zum Planen des Bearbeitens einer Restfläche des Bereichs zur Grunde gelegt werden. Beispielsweise kann eine bereits bearbeitete Fahrspur einer ersten Arbeitsgeräteeinheit als Zielkontur für eine zweite Arbeitsgeräteeinheit eingesetzt werden.

Ein erfindungsgemäßes Verfahren zum Bearbeiten eines viereckigen Bereichs eines Feldes mittels eines landwirtschaftlichen Arbeitsgeräts, wobei der Bereich zwischen seinen Ecken Randabschnitte und dabei einen ersten Randabschnitt und einen zweiten Randabschnitt gegenüber dem ersten Randabschnitt aufweist und wobei der zweite Randabschnitt schräg zum ersten Randabschnitt verläuft, ist dadurch gekennzeichnet, dass der Bereich gemäß einem Verfahren zum Planen des Bearbeitens wie oben beschrieben bearbeitet wird. Mit anderen Worten wird der Bereich so bearbeitet, wie es sich aus der vorstehend erläuterten Planung ergibt.

In einer bevorzugten Ausführungsform wird dabei eine Abweichung einer Position des Arbeitsgeräts von der Fahrspur ermittelt und bevorzugt korrigiert. Im bevorzugten Fall einer veränderbaren Arbeitsbreite wird die Abweichung vorzugsweise korrigiert, indem die Arbeitsbreite des Arbeitsgeräts verändert wird, wobei die Position des Arbeitsgeräts bevorzugt signallaufzeitbasiert und/oder satellitengestürzt bestimmt wird.

Für die in diesem Zusammenhang genannten Merkmale des Arbeitsgeräts gelten die bereits oben ausgeführten Definitionen und Variationsmöglichkeiten. Insbesondere kann das Arbeitsgerät mehrere Arbeitsgeräteeinheiten aufweisen, die getrennt voneinander den Bereich des Felds bearbeiten, die Arbeitsbreite kann eine wirksame Arbeitsbreite oder eine tatsächliche Arbeitsbreite sein und es kann auch auf eine veränderbare Arbeitsbreite verzichtet werden.

Weiter wird bevorzugt, dass die Lage des ersten und/oder zweiten Randabschnitts, der ersten und/oder zweiten Arbeitsbahn, der Fahrspur, des Schaltpunkts und/oder des Einlenkpunkts und/oder die Bearbeitung des Bereichs nach zumindest einem dieser Parameter für einen nachgelagerten Prozess, insbesondere einen Ausbringvorgang und/oder zur Dokumentation gespeichert wird. Der genannte Parameter ist dabei insbesondere die Arbeitsbahn, die Fahrspur, der Schaltpunkt, der Einlenkpunkt oder der jeweilige Randabschnitt. Eine Speicherung des Bearbeitungsverfahrens führt einerseits zu einer besseren Nachverfolgbarkeit der Umsetzung des Verfahrens und ermöglicht außerdem eine bessere Planung für die weitere Bearbeitung des Felds. Außerdem könnte durch eine solche Speicherung der Durchführung des Verfahrens die Möglichkeit geschaffen werden, dass Informationen für eine zukünftige Planung der Bearbeitung desselben Bereichs aufgenommen werden.

Eine erfindungsgemäße Vorrichtung zum Steuern eines landwirtschaftlichen Arbeitsgeräts zum Bearbeiten eines landwirtschaftlichen Felds ist dadurch gekennzeichnet, dass die Vorrichtung dazu ausgebildet ist, das Arbeitsgerät so zu steuern, dass ein zumindest viereckiger Bereich des Felds mittels des oben beschriebenen Verfahrens bearbeitbar ist.

Die Vorrichtung ist also beispielsweise so programmiert, dass das Verfahren zum Bearbeiten ausgeführt wird, insbesondere also die Einlenkpunkte und/oder Schaltpunkte während der Planung definiert wurden, und entsprechende Aktionen des Arbeitsgeräts zu einer passenden Zeit während der Bearbeitung initiiert werden.

Ein erfindungsgemäßes landwirtschaftliches Arbeitsgerät zum Bearbeiten eines landwirtschaftlichen Felds ist dadurch gekennzeichnet, dass das Arbeitsgerät eine Vorrichtung zum Steuern des landwirtschaftlichen Arbeitsgeräts wie oben beschrieben aufweist.

Bei dem Arbeitsgerät handelt es sich also beispielsweise um einen Pflug, eine Feldspritze oder ein ähnliches Arbeitsgerät mit einer Steuerungseinheit oder allgemeiner einer Vorrichtung zum Steuern des Arbeitsgeräts, so dass das Bearbeitungsverfahren, wie es im vorliegenden Text beschrieben wird, durch das Arbeitsgerät durchgeführt werden kann.

Bevorzugt ist dabei die Arbeitsbreite des Arbeitsgeräts während des Bearbeitens zwischen mindestens zwei verschiedenen Werten veränderbar. Ein solches Arbeitsgerät wird bevorzugt, weil es eine besonders effiziente Bearbeitung des Bereichs zulässt, indem innerhalb gewisser Grenzen optimal auf die geplante Arbeitsbreite eingegangen werden kann.

Ein erfindungsgemäßes Computerprogrammprodukt führt, wenn es auf einen Computer ausgeführt wird, ein Verfahren zum Planen einer Bearbeitung eines Bereichs eines landwirtschaftlichen Felds durch, wie es vorstehend beschrieben wurde.

Schließlich betrifft die Erfindung noch ein System zur Fernunterstützung eines Verfahrens zur Planung einer Bearbeitung, das von einem Benutzer ausgeführt wird, wobei zumindest einer der Verfahrensschritte von einem von dem Benutzer entfernten Helfer ausführbar ist. Mit anderen Worten betrifft die Erfindung auch ein System zur RemoteUnterstützung der Planung der Bearbeitung des Feldes, beispielsweise wenn der eigentliche Nutzer des Feldes die Planung der Bearbeitung aus der Distanz durchführen oder durchführen lassen möchte, beispielsweise um auf Infrastruktur zurückzugreifen, die in seinem räumlichen Umfeld nicht zur Verfügung stehen.

Weitere Merkmale und Vorteile der Erfindung ergeben sich aus der nachfolgenden Figurenbeschreibung und der Gesamtheit der Patentansprüche.

### KURZE FIGURENBESCHREIBUNG

Figur 1 zeigt eine schematische Draufsicht eines zu bearbeitenden Feldes, das einen viereckigen Bereich bildet.
Figur 2 zeigt eine Variante eines zu bearbeitenden Bereichs eines landwirtschaftlichen Feldes, der in der in Figur 2 gezeigten Ausführungsformen zehn Ecken aufweist und in mehrere Bereiche unterteilt wurde.

### WEGE ZUR AUSFÜHRUNG DER ERFINDUNG

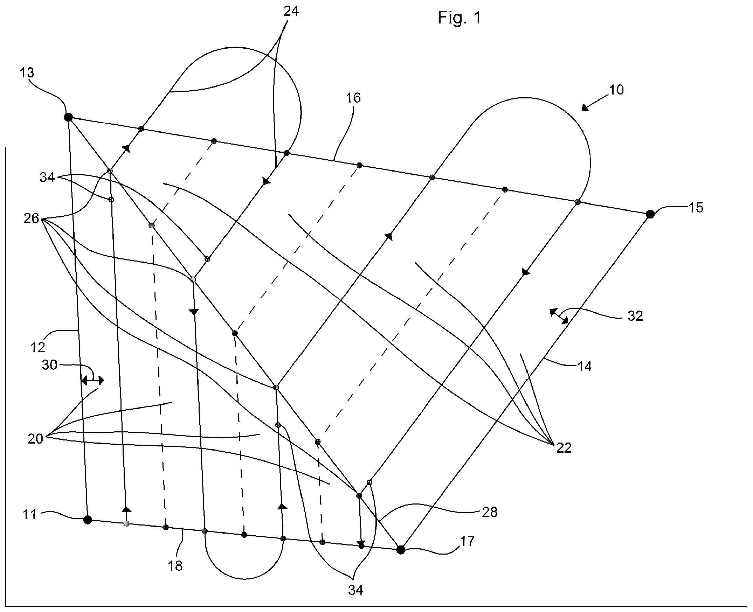

Figur 1 zeigt ein Beispiel eines viereckigen Bereichs 10 eines landwirtschaftlichen Feldes, das mittels eines lenkbaren oder steuerbaren landwirtschaftlichen Arbeitsgeräts bearbeitet werden soll. Figur 1 zeigt insbesondere die Fahrspurplanung.

Der Bereich 10 ist zunächst durch vier Eckpunkte 11, 13, 15, 17 definiert, zwischen denen sich vier Randabschnitte 12, 14, 16, 18 erstrecken. Ein erster Randabschnitt 12 verläuft entlang des linken Rands des Bereichs 10 und soll einen Startabschnitt für die Bearbeitung des Bereichs 10 darstellen. Ein dem ersten Randabschnitt 12 gegenüberliegender zweiten Randabschnitt 14 verläuft schräg zum ersten Randabschnitt 12 und stellt einen Zielabschnitt dar, das heißt den Abschnitt, an dem das landwirtschaftliche Arbeitsgerät die Bearbeitung des Bereichs 10 abschließen soll.

Vor dem ersten Randabschnitt 12, d.h. in Figur 1 links des ersten Randabschnitts 12, und/oder hinter dem zweiten Randabschnitt 14, d.h. in Figur 1 rechts des zweiten Randabschnitts 14, kann sich das Feld vorzugsweise parallel zum ersten Randabschnitt 12 bzw. zweiten Randabschnitt 14 weiter erstrecken, so dass dort eine herkömmliche, effiziente und hochwertige Parallelbearbeitung des Feldes möglich ist, bis der Rand des Feldes erreicht wird. Mit anderen Worten kann der Bereich 10 vorzugsweise zwischen den Rändern des eigentlichen Feldes positioniert sein und dazu genutzt werden, die Ausrichtung der Fahrspuren von der des einen Randes an die des anderen Randes anzupassen.

Figur 1 zeigt vier nebeneinander verlaufende erste Arbeitsbahnen 20 parallel zum ersten Randabschnitt 12 und vier nebeneinander verlaufende zweite Arbeitsbahnen 22 parallel zum zweiten Randabschnitt 14. Jede der ersten Arbeitsbahnen 20 geht entlang einer Diagonalen 28, die sich zwischen dem ersten Randabschnitt 12 und dem zweiten Randabschnitt 14, genauer gesagt zwischen dem Eckpunkt 13 und dem Eckpunkt 17, erstreckt, in jeweils eine zweite Arbeitsbahn 22 über.

Entlang den ersten und zweiten Arbeitsbahnen 20, 22 ist eine Fahrspur 24 definiert, wobei die Breite der Fahrspur über den Bereich der ersten Arbeitsbahnen 20 bzw. zweiten Arbeitsbahnen 22 jeweils gleich ist und sich im Bereich der Diagonalen 28 von der Breite der ersten Arbeitsbahnen 20 zur Breite der zweiten Arbeitsbahnen 22 oder von der Breite der zweiten Arbeitsbahnen 22 zur Breite der ersten Arbeitsbahnen 20 ändert. Außerhalb der Randabschnitte 16, 18, welche den ersten Randabschnitt 12 und den zweiten Randabschnitt 14 miteinander verbinden, wird ein Vorgewendebereich definiert, der in Figur 1 nicht separat eingezeichnet ist. In diesem Bereich kann das Arbeitsgerät wenden und wieder in den Bereich 10 eindringen.

Figur 1 zeigt ferner Einlenkpunkte 26 entlang der Fahrspur 24, die in der in Figur 1 gezeigten Ausführungsform auf der Diagonalen 28 liegen. An diesen Einlenkpunkten 26 ändert das Arbeitsgerät seine Fahrtrichtung entlang der Fahrspur 24 von einer Richtung entlang einer der ersten Arbeitsbahnen 20 zu einer Richtung entlang einer der zweiten Arbeitsbahnen 22, wobei der Anteil einer Fahrtrichtung entlang der ersten Arbeitsbahnen 20 gegenüber einem Anteil entlang der zweiten Arbeitsbahnen 22 abnimmt, je größer eine Entfernung 30 von dem ersten Randabschnitt 12 wird und je kleiner eine Entfernung 32 von dem zweiten Randabschnitt 14 wird.

Figur 1 zeigt ferner Schaltpunkte 34, an denen damit begonnen wird, die Arbeitsbreite des Arbeitsgeräts an den nach dem folgenden Einlenkpunkt 26 zu befahrenden Abschnitt der Fahrspur 24 anzupassen. Diese Schaltpunkte 34 können auch in Fahrtrichtung hinter dem jeweiligen Einlenkpunkt 26 angeordnet sein oder mit dem jeweiligen Einlenkpunkt 26 zusammenfallen. Darüber hinaus ist es grundsätzlich möglich, den Bereich 10 mit einem Arbeitsgerät ohne variable Arbeitsbreite zu bearbeiten und eine solche Bearbeitung gemäß dem Verfahren, wie es vorliegend beschrieben wird, zu planen. In diesem Fall kann auf einen Schaltpunkt 34 natürlich verzichtet werden.

Aus der Differenz A zwischen einer Breite der ersten Arbeitsbahnen 20 und einer Breite der zweiten Arbeitsbahnen 22 lässt sich die Anzahl an erforderlichen Einlenkpunkten 26 und damit letztlich die erforderliche Breite des Bereichs 10 bestimmen, um von der Richtung parallel zum ersten Randabschnitt 12 zu der Richtung parallel zum zweiten Randabschnitt 14 zu gelangen. Wenn der Randabschnitt 16 um ein Vielfaches dieser Differenz A größer als der Randabschnitt 18 ist, wird eine dieser Vielzahl entsprechende Anzahl an Durchgängen und Einlenkpunkten 2 6 erforderlich. Es ist jedoch auch möglich, mehr also die minimal erforderliche Zahl an Einlenkpunkten und somit mehr nebeneinander verlaufende erste und zweite Arbeitsbahnen 20, 22 zu nutzen, um die Richtungskorrektur vorzunehmen. Dies hat den Vorteil, dass der Winkel, um den am Einlenkpunkt 26 gelenkt werden muss, kleiner wird. Bei einem Arbeitsgerät mit variabler Arbeitsbreite kann so auch eine geringere Verstellung der Arbeitsbreite genutzt werden, was beispielsweise den Vorteil hat, mehr Korrekturmöglichkeiten zu haben und eine gleichmäßigere Bodenbearbeitung zu erhalten.

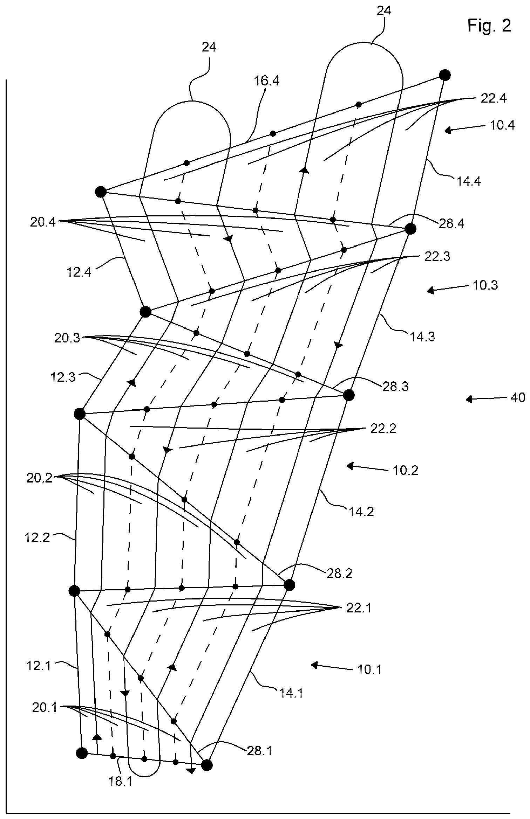

Figur 2 zeigt einen komplexen, zehneckigen Bereich 40, der in mindestens vier jeweils viereckige Bereiche 10.1, 10.2, 10.3, 10.4 unterteilt werden kann, um das erfindungsgemäße Verfahren zur effizienten Bearbeitung des komplexen Bereichs 40 einsetzen zu können. Die jeweiligen Elemente des Bereichs 40 entsprechen den mit gleicher Bezugsziffer versehenen Bereichen aus Figur 1, ergänzt um eine den jeweiligen Bereich kennzeichnende Ziffer nach einem Punkt. Beispielsweise bezeichnen die Bezugszeichen 20.1 die ersten Arbeitsbahnen (vgl. erste Arbeitsbahnen 20 in Figur 1) des ersten Bereichs 10.1, während die Bezugszeichen 20.2, 20.3 und 20.4 die ersten Arbeitsbahnen des zweiten, dritten und vierten Bereichs 10.2, 10.3 und 10.4 bezeichnen.

Der Fachmann erkennt außerdem, dass der komplexe Bereich 40 nicht nur in der in Figur 2 gezeigten Art in einzelne Bereiche 10.1 - 10.4 unterteilt werden kann, sondern auch andere Unterteilungen möglich sind. Beispielsweise kann auch ein Bereich definiert werden, der durch die Randabschnitte 12.2, 14.1 sowie die Diagonalen 28.1 und 28.2 begrenzt ist, wobei dessen "Diagonale" dann durch den "Randabschnitt" 16.1 gebildet wird.

Figur 2 dient der Illustration, dass nahezu jedes beliebige Feld in eine Vielzahl von "Bereichen" im Sinne der vorliegenden Erfindung unterteilbar ist, so dass das erfindungsgemäße Verfahren auf nahezu jede Kontur eines Felds anwendbar ist.

Durch die vorliegende Erfindung ist es möglich, eine Bearbeitung eines zumindest viereckigen Bereichs eines landwirtschaftlichen Felds mittels eines lenkbaren oder steuerbaren landwirtschaftlichen Arbeitsgeräts besonders effizient und schonend zu planen, so dass eine gleichmäßige Bodenbearbeitung und ein geringer Verschleiß der beteiligten Arbeitsgeräte erzielt werden können.

Die obige Beschreibung der bevorzugten Ausführungsformen und Beispiele dienen lediglich der Illustration der Erfindung und ist selbstverständlich nicht einschränkend zu verstehen.

## Patentansprüche

1. Verfahren zum Planen eines Bearbeitens eines zumindest viereckigen Bereichs (10) eines landwirtschaftlichen Felds mittels eines lenkbaren oder steuerbaren landwirtschaftlichen Arbeitsgeräts, wobei der Bereich (10) zwischen seinen Ecken (11, 13, 15, 17) Randabschnitte (12, 14, 16, 18) und dabei einen ersten Randabschnitt (12) und einen zweiten Randabschnitt (14) gegenüber dem ersten Randabschnitt (12) aufweist und wobei der zweite Randabschnitt (14) schräg zum ersten Randabschnitt (12) verläuft,
umfassend die folgenden Schritte:
(a) Bestimmen mehrerer nebeneinander verlaufender erster Arbeitsbahnen (20) parallel und/oder äquidistant zum ersten Randabschnitt (12) und Bestimmen mehrerer nebeneinander verlaufender zweiter Arbeitsbahnen (22) parallel und/oder äquidistant zum zweiten Randabschnitt (14),
(b) Bestimmen einer Fahrspur (24), die zumindest teilweise entlang den ersten Arbeitsbahnen (20) und den zweiten Arbeitsbahnen (22) verläuft und entlang der das landwirtschaftliche Arbeitsgerät vom ersten Randabschnitt (12) über den Bereich (10) zum zweiten Randabschnitt (14) bewegt werden soll, um den Bereich (10) zu bearbeiten, durch den folgenden Schritt gekennzeichnet:
(c) Bestimmen mehrerer Einlenkpunkte (26) entlang der Fahrspur (24), an denen das Arbeitsgerät von einer Richtung entlang einer der ersten Arbeitsbahnen (20) in eine Richtung entlang einer der zweiten Arbeitsbahnen (22) oder von einer Richtung entlang einer der zweiten Arbeitsbahnen (22) in eine Richtung entlang einer der ersten Arbeitsbahnen (20) gelenkt wird, so dass die Fahrspur (24) mit zunehmender Entfernung (30) vom ersten Randabschnitt (12) weniger entlang den ersten Arbeitsbahnen (20) und mit abnehmender Entfernung (32) zum zweiten Randabschnitt (14) mehr entlang den zweiten Arbeitsbahnen (22) verläuft.

2. Verfahren nach Anspruch 1, wobei die Einlenkpunkte (26) entlang der Fahrspur (24) so bestimmt werden, dass sie auf einer den ersten Randabschnitt (12) und den zweiten Randabschnitt (14) verbindenden Diagonalen (28) liegen.

3. Verfahren nach Anspruch 1 oder 2, wobei die Arbeitsbreite des Arbeitsgeräts während des Bearbeitens zwischen mindestens zwei verschiedenen Werten veränderbar ist, wobei ein Schaltpunkt (34) oder mehrere Schaltpunkte (34) entlang der Fahrspur (24) bestimmt wird oder werden, an dem oder denen damit begonnen wird, die Arbeitsbreite des Arbeitsgeräts von einem der mindestens zwei Werte auf einen anderen der mindestens zwei Werte zu verändern.

4. Verfahren nach einem der vorhergehenden Ansprüche, wobei das Arbeitsgerät an einen Schlepper oder Träger ankoppelbar ist und insbesondere als Bodenbearbeitungsgerät oder als Ausbringeinrichtung, bevorzugt als ein Pflug, ein Grubber, eine Scheibenegge, ein angetriebenes Bodenbearbeitungsgerät, eine Sämaschine, eine Feldspritze oder ein Düngerstreuer ausgebildet ist.

5. Verfahren nach einem der vorhergehenden Ansprüche, wobei die Fläche des Bereichs (10) des Felds die Form eines Trapezes, insbesondere eines rechtwinkligen Trapezes aufweist.

6. Verfahren nach einem der vorhergehenden Ansprüche, wobei das Arbeitsgerät eine Positionsbestimmungsvorrichtung, insbesondere eine Vorrichtung zur signallaufzeitbasierten und/oder satellitengestützten Positionsbestimmung aufweist.

7. Verfahren nach Anspruch 6, wobei die Lage und/oder Ausrichtung zumindest eines der Randabschnitte (12, 14, 16, 18) des Bereichs (10), bevorzugt aller zumindest vier Randabschnitte (12, 14, 16, 18) des Bereichs (10), durch Abfahren des zumindest einen Randabschnitts (12, 14, 16, 18), bevorzugt aller zumindest vier Randabschnitte (12, 14, 16, 18) des Bereichs (10), insbesondere mittels des Arbeitsgeräts, bestimmt wird.

8. Verfahren nach einem der vorhergehenden Ansprüche, wobei zumindest einer der Schritte zeitversetzt zu einer Bearbeitung des Bereichs (10) durchgeführt wird.

9. Verfahren nach einem der vorhergehenden Ansprüche, wobei das Arbeitsgerät zumindest zwei Arbeitsgeräteeinheiten, bevorzugt mit jeweils einer Einheitsarbeitsbreite, die jeweils zwischen mindestens zwei verschiedenen Werten veränderbar ist, umfasst, die voneinander getrennt in räumlich verschiedenen Teilbereichen des Bereichs (10) nutzbar sind, wobei die Schritte so durchgeführt werden, dass sich die Arbeitsgeräteeinheiten beim Bearbeiten des Bereichs (10) ergänzen.

10. Verfahren nach Anspruch 9, wobei Aufzeichnungen von bearbeiteten und/oder noch zu bearbeitenden Teilbereichen des Bereichs (10) einem Verfahren zum Planen eines Bearbeitens einer Restfläche des Bereichs zugrunde gelegt werden.

11. Verfahren zum Bearbeiten eines viereckigen Bereichs (10) eines Felds mittels eines landwirtschaftlichen Arbeitsgeräts, wobei der Bereich (10) zwischen seinen Ecken (11, 13, 15, 17) Randabschnitte (12, 14, 16, 18) und dabei einen ersten Randabschnitt (12) und einen zweiten Randabschnitt (14) gegenüber dem ersten Randabschnitt (12) aufweist und wobei der zweite Randabschnitt (14) schräg zum ersten Randabschnitt (12) verläuft, **dadurch gekennzeichnet, dass** der Bereich (10) gemäß einem Verfahren zum Planen des Bearbeitens nach einem der vorhergehenden Ansprüche bearbeitet wird.

12. Verfahren nach Anspruch 11, wobei eine Abweichung einer Position des Arbeitsgeräts von der Fahrspur (24) ermittelt, und bevorzugt korrigiert wird, insbesondere bei veränderbarer Arbeitsbreite, indem die Arbeitsbreite des Arbeitsgeräts verändert wird, wobei die Position des Arbeitsgeräts bevorzugt signallaufzeitbasiert und/oder satellitengestützt bestimmt wird.

13. Verfahren nach Anspruch 11 oder 12, wobei die Lage des ersten (12) und/oder zweiten Randabschnitts (14), der ersten (20) und/oder zweiten Arbeitsbahn (22), der Fahrspur (24), des Schaltpunkts (34) und/oder des Einlenkpunkts (26) und/oder die Bearbeitung des Bereichs (10) nach zumindest einem dieser Parameter für einen nachgelagerten Prozess, insbesondere einen Ausbringvorgang, und/oder zur Dokumentation gespeichert wird.

14. Vorrichtung zum Steuern eines landwirtschaftlichen Arbeitsgeräts zum Bearbeiten eines landwirtschaftlichen Felds, **dadurch gekennzeichnet, dass** die Vorrichtung dazu ausgebildet ist, das Arbeitsgerät so zu steuern, dass ein zumindest viereckiger Bereich (10) des Felds mittels des Arbeitsgeräts gemäß dem Verfahren nach einem der Ansprüche 11 bis 13 bearbeitbar ist.

15. Landwirtschaftliches Arbeitsgerät zum Bearbeiten eines landwirtschaftlichen Felds, **dadurch gekennzeichnet, dass** das Arbeitsgerät eine Vorrichtung nach Anspruch 14 aufweist.

16. Landwirtschaftliches Arbeitsgerät nach Anspruch 15, **dadurch gekennzeichnet, dass** die Arbeitsbreite des Arbeitsgeräts während des Bearbeitens zwischen mindestens zwei verschiedenen Werten veränderbar ist.

17. Computerprogrammprodukt, das, wenn es auf einem Computer ausgeführt wird, ein Verfahren nach einem der Ansprüche 1 bis 10 durchführt, **dadurch gekennzeichnet, dass** zumindest die Schritte a)- c) aus Anspruch 1 durch das Computerprogrammprodukt durchgeführt werden.

18. System zur Fernunterstützung eines Verfahrens nach einem der Ansprüche 1 bis 10, das von einem Benutzer ausgeführt wird, **dadurch gekennzeichnet, dass** zumindest einer der kennzeichnenden Schritte a)- c) aus Anspruch 1 von einem von dem Benutzer entfernten Helfer ausführbar ist.

## Claims

1. Method for planning the cultivation of at least a quadrangular area (10) of an agricultural field by means of a steerable or controllable agricultural machine, wherein the area (10) between its corners (11, 13, 15, 17) has edge sections (12, 14, 16, 18) and thereby a first edge section (12) and a second edge section (14) opposite the first edge section (12), and wherein the second edge section (14) is oblique to the first edge section (12), comprising the following steps:
(a) determination of a plurality of first working paths (20) running next to each other in parallel with or equidistant from the first edge section (12) and determination of a plurality of second working paths (22) running next to each other in parallel with or equidistant from the second edge section (14),
(b) determination of a lane (24) that runs at least partially along the first working paths (20) and the second working paths (22) and along which the agricultural machine is to be moved from the first edge section (12) over the area (10) to the second edge section (14) in order to cultivate the area (10), **characterized by** the following step:
(c) determination of a plurality of turning points (26) along the lane (24) at which the machine is steered from a direction along one of the first working paths (20) into a direction along one of the second working paths (22) or from a direction along one of the second working paths (22) into a direction along one of the first working paths (20), such that the lane (24) runs less along the first working paths (20) as the distance (30) from the first edge section (12) increases and more along the second working paths (22) as the distance (32) from the second edge section (14) decreases.

2. Method according to claim 1, wherein the turning points (26) along the lane (24) are determined so that they lie on a diagonal (28) connecting the first edge section (12) and the second edge section (14).

3. Method according to claim 1 or 2, wherein the working width of the machine can be changed between at least two different values during cultivation, wherein one switching point (34) or multiple switching points (34) is or are determined along the lane (24) at which the working width of the machine is started to be changed from one of the at least two values to another of the at least two values.

4. Method according to one of the preceding claims, wherein the machine can be coupled to a tractor or carrier and is configured in particular as a soil machine or as a spreading device, preferably as a plow, a cultivator, a disk harrow, a driven soil machine, a seeder, a field sprayer or a fertilizer spreader.

5. Method according to one of the preceding claims, wherein the surface of the area (10) has the shape of a trapezoid, especially a rectangular trapezoid.

6. Method according to one of the preceding claims, wherein the machine has a positioning device, in particular a device for the determination of position based on signal propagation delay or supported by satellites.

7. Method according to claim 6, wherein the position and/or alignment of at least one of the edge sections (12, 14, 16, 18) of the area (10), preferably all at least four edge sections (12, 14, 16, 18)of the area (10), is determined by traversing the at least one edge section (12, 14, 16, 18), preferably all at least four edge sections (12, 14, 16, 18) of the area (10), in particular by means of the machine.

8. Method according to one of the preceding claims, wherein at least one of the steps is carried out with a time delay to cultivate the area (10).

9. Method according to one of the preceding claims, wherein the machine comprises at least two machine units, in each case preferably with a unit working width that can be changed between at least two different values, which can be used separately in spatially different sub-areas of the area (10), wherein the steps are carried out in such a manner that the machine units complement each other when cultivating the area (10).

10. Method according to claim 9, wherein recordings of sub-areas of the area that are cultivated and/or still to be cultivated are used as a basis (10) for a method for planning the cultivation of a remaining surface of the area.

11. Method for cultivating a quadrangular area (10) of a field by means of an agricultural machine, wherein the area (10) between its corners (11, 13, 15, 17) has edge sections (12, 14, 16, 18) and thereby a first edge section (12) and a second edge section (14) opposite the first edge section (12), and wherein the second edge section (14) is oblique to the first edge section (12), **characterized in that** the area (10) is cultivated in accordance with a method for planning the cultivation according to one of the preceding claims.

12. Method according to claim 11, wherein a deviation of a position of the machine from the lane (24) is determined and preferably corrected, in particular with a variable working width, by changing the working width of the machine, wherein the position of the machine is preferably determined in a manner based on signal propagation delay or supported by satellites.

13. Method according to claim 11 or 12, wherein the position of the first (12) and/or second edge section (14), the first (20) and/or second working path (22), the lane (24), the switching point (34) and/or the turning point (26) and/or the cultivation of the area (10) is stored according to at least one of these parameters for a downstream process, in particular a spreading operation and/or for documentation.

14. Device for controlling an agricultural machine for cultivating an agricultural field, **characterized in that** the device is configured to control the machine so that an at least quadrangular area (10) of the field can be cultivated by means of the machine in accordance with the method according to one of the claims 11 to 13.

15. Agricultural machine for cultivating an agricultural field, **characterized in that** the machine has a device according to claim 14.

16. Agricultural machine according to claim 15, wherein the working width of the machine can be changed between at least two different values during cultivation.

17. A computer program product that, when run on a computer, performs a method according to one of the claims 1 to 10, **characterized in that** at least the method steps a) - c) of claim 1 can be carried out by a computer program.

18. System for remotely supporting a method according to one of the claims 1 to 10, which is carried out by a user, **characterized in that** at least one of the method steps a) - c) can be carried out by an assistant remote from the user.

## Revendications

1. Procédé, destiné à planifier un traitement d'une zone (10) au moins carrée d'un champ agricole, à l'aide d'un engin de travail agricole, susceptible d'être dirigé ou commandé, entre ses angles (11, 13, 15, 17), la zone (10) comportant des segments de bordure (12, 14, 16, 18) et à cet effet, un premier segment de bordure (12) et un deuxième segment de bordure (14) placé au vis-à-vis du premier segment de bordure (12), et le deuxième segment de bordure (14) s'écoulant en oblique par rapport au premier segment de bordure (12),
comportant les étapes suivantes, consistant à :
(a) déterminer plusieurs premiers trajets de travail (20) s'écoulant côte à côte, de manière parallèle et/ou équidistante par rapport au premier segment de bordure (12) et déterminer plusieurs deuxièmes trajets de travail (22) s'écoulant côte à côte, de manière parallèle et/ou équidistante par rapport au deuxième segment de bordure (14),
(b) déterminer une voie de déplacement (24), qui s'écoule au moins en partie le long du premier trajet de travail (20) et du deuxième trajet de travail (22) et le long de laquelle l'engin de travail agricole est censé être déplacé sur la zone (10), à partir du premier segment de bordure (12) vers le deuxième segment de bordure (14), pour traiter la zone (10), **caractérisé par** l'étape suivante, consistant à :
(c) déterminer plusieurs points de braquage (26) le long de la voie de déplacement (24), sur lesquels l'engin de travail est dirigé d'une direction le long de l'un des premiers trajets de travail (20), dans une direction le long de l'un des deuxièmes trajets de travail (22) ou d'une direction le long de l'un des deuxièmes trajets de travail (22), dans une direction le long de l'un des premiers trajets de travail (20), de telle sorte qu'au fur et à mesure que l'éloignement (30) par rapport au premier segment de bordure (12) croît, la voie de déplacement (24) s'écoule moins le long des premiers trajets de travail (20) et qu'a fur et à mesure que l'éloignement (32) par rapport au deuxième segment de bordure (14) décroît, elle s'écoule plus le long des deuxièmes trajets de travail (22).

2. Procédé selon la revendication 1, les points de braquage (26) le long de la voie de déplacement (24) étant déterminés de telle sorte qu'ils se situent sur une diagonale (28) reliant le premier segment de bordure (12) et le deuxième segment de bordure (14).

3. Procédé selon la revendication 1 ou 2, la largeur de travail de l'engin de travail pendant le traitement étant variable entre au moins deux différentes valeurs, un point de commutation (34) ou plusieurs points de commutation (34) étant déterminé ou déterminés le long de la voie de déplacement (24), sur lequel ou lesquels il est commencé à faire varier la largeur de travail de l'engin de travail de l'une des au moins deux valeurs à une autre des aux moins deux valeurs.

4. Procédé selon l'une quelconque des revendications précédentes, l'engin de travail étant susceptible d'être accouplé à un tracteur ou à un porteur et étant conçu notamment sous la forme d'un engin de travail du sol ou d'un dispositif d'épandage, de préférence sous la forme d'une charrue, d'un cultivateur, d'un déchaumeur, d'un engin de travail du sol entraîné, d'un semoir, d'un pulvérisateur agricole ou d'un épandeur d'engrais.

5. Procédé selon l'une quelconque des revendications précédentes, la surface de la zone (10) du champ présentant la forme d'un trapèze, notamment d'un trapèze orthogonal.

6. Procédé selon l'une quelconque des revendications précédentes, l'engin de travail comportant un dispositif de localisation, notamment un dispositif de localisation basé sur la propagation de signaux et/ou assisté par satellite.

7. Procédé selon la revendication 6, la situation et/ou l'orientation d'au moins l'un des segments de bordure (12, 14, 16, 18) de la zone (10), de préférence de tous les au moins quatre segments de bordure (12, 14, 16, 18) de la zone (10) étant déterminée par parcours de l'au moins un segment de bordure (12, 14, 16, 18), de préférence de tous les au moins quatre segments de bordure (12, 14, 16, 18) de la zone (10), notamment à l'aide de l'engin de travail.

8. Procédé selon l'une quelconque des revendications précédentes, au moins l'une des étapes étant réalisée en différé par rapport à un traitement de la zone (10).

9. Procédé selon l'une quelconque des revendications précédentes, l'engin de travail comprenant au moins deux unités d'engin de travail, de préférence assujetties chacune d'une largeur de travail de l'unité qui est chaque fois variable entre au moins deux différentes valeurs, qui sont utilisables en étant séparées l'une de l'autre dans des zones partielles différentes dans l'espace de la zone (10), les étapes étant réalisées de telle sorte que les unités d'engin de travail se complètent lors du traitement de la zone (10).

10. Procédé selon la revendication 9, des enregistrements de zones partielles de la zone (10) traitées et/ou restant encore à traiter servant de base à un procédé de planification d'un traitement d'une surface restante de la zone.

11. Procédé, destiné à traiter une zone (10) carrée d'un champ à l'aide d'un engin de travail agricole, la zone (10) comportant entre ses angles (11, 13, 15, 17) des segments de bordure (12, 14, 16, 18), et à cet effet un premier segment de bordure (12) et un deuxième segment de bordure (14), placé au vis-à-vis du premier segment de bordure (12) et le deuxième segment de bordure (14) s'écoulant en oblique par rapport au premier segment de bordure (12), **caractérisé en ce que** la zone (10) est traitée conformément à un procédé de planification du traitement selon l'une quelconque des revendications précédentes.

12. Procédé selon la revendication 11, un écart entre une position de l'engin de travail et la voie de déplacement (24) étant recherché et de préférence corrigé, notamment si la largeur de travail est variable, en faisant varier la largeur de travail de l'engin de travail, la position de l'engin de travail étant déterminée de préférence sur la base d'une propagation de signaux et/ou avec une assistance par satellite.

13. Procédé selon la revendication 11 ou 12, la situation du premier (12) et/ou du deuxième segment de bordure (14), du premier (20) et/ou du deuxième trajet de travail (22), de la voie de déplacement (24), du point de commutation (34) et/ou du point de braquage (26) et/ou le traitement de la zone (10) selon au moins l'un desdits paramètres étant mémorisé(e) pour un processus en aval, notamment un processus d'épandage, et/ou à des fins de documentation.

14. Dispositif, destiné à commander un engin de travail agricole, dédié au traitement d'un champ agricole, **caractérisé en ce que** le dispositif est conçu pour commander l'engin de travail de telle sorte qu'une zone (10) au moins carrée du champ puisse être traitée à l'aide de l'engin de travail conformément au procédé selon l'une quelconque des revendications 11 à 13.

15. Engin de travail agricole, destiné à traiter un champ agricole, **caractérisé en ce que** l'engin de travail comporte un dispositif selon la revendication 14.

16. Engin de travail agricole selon la revendication 15, **caractérisé en ce que** la largeur de travail de l'engin de travail est variable pendant le traitement entre au moins deux différentes valeurs.

17. Produit de programme informatique, qui, lorsqu'il est exécuté sur un ordinateur, réalise un procédé selon l'une quelconque des revendications 1 à 10, **caractérisé en ce qu'**au moines les étapes a) à c) de la revendication 1 sont réalisées par le programme de produit informatique.

18. Système, destiné à télé-assister un procédé selon l'une quelconque des revendications 1 à 10, qui est réalisé par un utilisateur, **caractérisé en ce qu'**au moins l'une des étapes caractéristiques a) à c) de la revendication 1 est susceptible d'être réalisée par un assistant éloigné de l'utilisateur.
